# FASCICULE DE BREVET EUROPEEN

(11) **EP 3 350 066 B1**
(45) Date de publication et mention de la délivrance du brevet: **28.08.2019**
(21) Numéro de dépôt: 16774527.2
(22) Date de dépôt: 09.09.2016
(51) Int. Cl.: B62D 27/02, B62D 25/06, B62D 65/02

(54) **PROCEDE D'ASSEMBLAGE ENTRE DEUX ELEMENTS EN TOLE METALLIQUE**
MONTAGEVERFAHREN ZWISCHEN ZWEI ELEMENTEN AUS BLECH
ASSEMBLY METHOD BETWEEN TWO ELEMENTS MADE OF SHEET METAL

(30) Priorité: 18.09.2015 FR 1558846
(43) Date de publication de la demande: 25.07.2018
(73) Titulaire: PSA AUTOMOBILES S.A., 78300 Poissy (FR)
(72) Inventeur: FEINER, David, 95120 Ermont (FR); LENOIR, Romaric, 78560 Le Port Marly (FR)
(74) Mandataire: Fernandez, Francis Lionel
(86) Numéro de dépôt international: PCT/FR2016/052283
(87) Numéro de publication internationale: WO 2017/046494

(56) Documents cités:
- EP-A1- 1 454 818
- EP-A1- 2 682 613
- EP-A2- 1 386 828
- DE-A1-102004 016 849
- FR-A1- 2 943 266
- JP-A- 2010 242 943

## Description

La présente invention se rapporte à un procédé d'assemblage entre deux éléments en tôle métallique et, plus particulièrement, destiné à l'assemblage de deux pièces de véhicule automobile tel qu'un pavillon et une caisse d'un véhicule automobile.

Dans certains domaines techniques, comme le domaine automobile par exemple, on a proposé de réaliser l'assemblage de deux éléments en tôle métallique par brasage, ce qui permet d'éviter de nombreux inconvénients d'un assemblage traditionnel par soudure électrique, notamment le fait qu'un tel mode d'assemblage nécessite la réalisation de points de soudure électriques (abrégés en PSE) au fond d'une gorge de jonction entre les deux pièces à assembler, ladite gorge étant masquée par une bande enjoliveur.

Un assemblage par soudo-brasage permet une jonction continue des pièces à assembler, la disparition de la gorge de jonction, et donc de la bande enjoliveur. Il s'ensuit de nombreux avantages esthétiques et mécaniques.

Afin de répondre aux critères esthétiques et mécaniques, le cordon de brasage doit être le plus possible exempt d'irrégularités et étanche, c'est-à-dire exempt de trou.

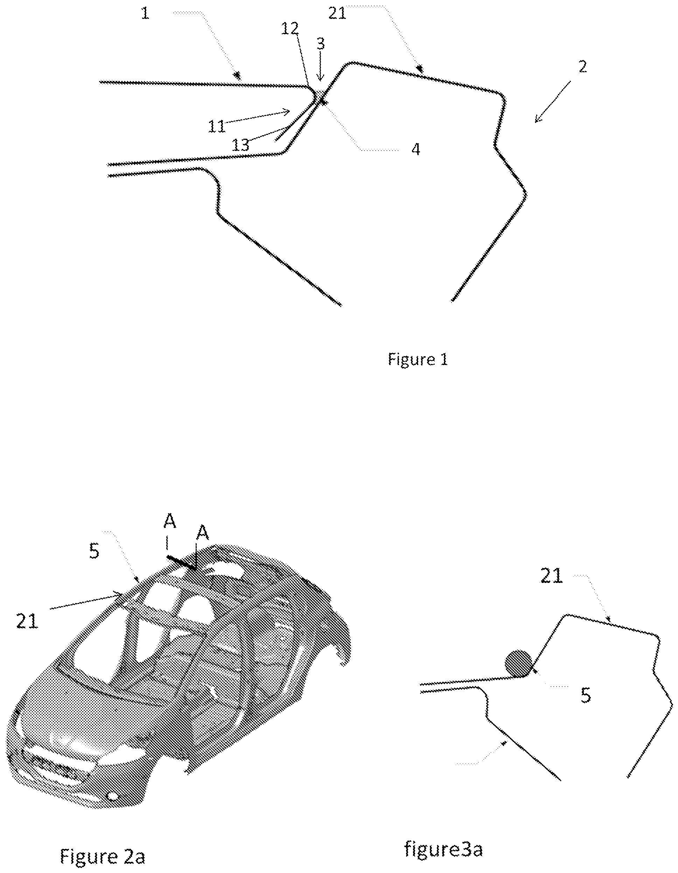

On a ainsi proposé de réaliser un soudo-brasage au laser d'un pavillon d'un véhicule automobile et d'un côté d'un habitacle dudit véhicule automobile tel que décrit dans FR 2 943 266. Le cordon de soudure est ainsi déposé au fond d'un profil de joint sensiblement en V ménagé entre le pavillon et le côté de caisse comme on peut le voir sur la figure 1.

Un tel procédé est généralement mis en oeuvre de manière robotisée. Ainsi, une tête d'un bras robotisé est apte à se déplacer le long d'une ligne de brasure entre un pavillon d'un véhicule automobile et un côté d'un habitacle dudit véhicule. Le dispositif comprend un moyen de distribution d'un métal d'apport à destination d'une zone à braser située sur la ligne de brasure, ledit moyen de distribution étant associé à un moyen de fusion apte à permettre la fusion du métal d'apport au niveau de ladite zone à braser. Un moyen de fusion peut être une tête laser apte à émettre un faisceau laser en direction de la zone à braser. Ainsi, une opération d'installation d'un pavillon sur un habitacle se déroule de la façon suivante. Tout d'abord un robot vient mettre en place le pavillon sur l'habitacle. L'ensemble est ensuite amené dans la cabine laser pour l'opération de brasage. Le pavillon arrive dans la cabine laser pointé sur ses traverses avant et arrière. Cela permet de garantir l'accostage entre les pièces au début et fin du cordon. Cela permet également de rendre indépendant la géométrie de chaque côté en créant une fibre neutre au milieu du pavillon. De cette façon, on peut soudobraser les deux côtés du pavillon de façon séparée l'un après l'autre.

Cependant, dans certaines installations de production, il n'est pas toujours possible de mettre en oeuvre de tels assemblages robotisés. Aussi, pour réaliser des véhicules similaires, on doit mettre en oeuvre des procédés d'assemblage différents nécessitant de modifier le pavillon et/ou le côté de caisse. On aboutit alors à une diversité dans la conception des pièces destinées pourtant à constituer des véhicules identiques à la base ce qui génère des coûts.

Afin de pallier ces inconvénients, la présente invention propose un procédé d'assemblage entre deux pièces tel qu'un pavillon et un côté de caisse qui puisse être utilisé sur des pièces qui pourraient également être assemblées notamment par un procédé de soudobrasage au laser ou équivalent mis en oeuvre de manière robotisé.

A cet effet, l'invention a pour objet un procédé d'assemblage entre deux éléments en tôle métallique, le bord du premier élément étant conformé pour venir en appui contre le second élément, formant une zone d'assemblage délimitée au moins par l'extrémité libre du bord du premier élément, tandis que, du côté de la zone d'assemblage opposé à l'extrémité libre dudit bord du premier élément, les premier et second éléments s'étendent tous deux au-delà de cette zone d'assemblage, caractérisé en ce que ledit procédé comprend :
la dépose d'un cordon de colle sur l'un des éléments, de sorte que, lors de l'assemblage des deux éléments, la ligne d'encollage se positionne entre les deux éléments, au niveau de la zone d'assemblage, de préférence le long de l'extrémité libre du bord du premier élément, puis
la réalisation d'au moins une soudure entre les deux éléments le long du bord de la zone d'assemblage, opposé au bord de la zone d'assemblage constitué par l'extrémité libre du bord du premier élément, cette fixation par soudure permettant de maintenir les deux éléments immobiles l'un par rapport à l'autre jusqu'à une étape de durcissement de la colle finalisant l'assemblage.

Un tel procédé permet d'obtenir un assemblage par soudo-collage dont la résistance mécanique est particulièrement renforcée, le collage étant un collage dit structural, la soudure ou les points de soudure réalisés le long de la zone d'assemblage mais à l'opposé de la ligne d'encollage par rapport à la zone d'assemblage favorisant cette résistance. De manière avantageuse, la zone d'assemblage est, de préférence, en forme de bande, le long du premier élément.

On utilise de préférence une colle dite structurale ou de structure telle que du type colle époxy ou polyuréthane, utilisée dans l'industrie automobile. Une telle colle peut être du type mono-composant et polymérisable dans le bain de cataphorèse. Elle peut également être du type bi-composant et polymérisable à température ambiante.

Selon un mode de mise en oeuvre préféré de l'invention on dépose la colle selon une ligne discontinue, la ligne d'encollage présentant une succession de tirets de colle déposés et des tronçons exempts de colle, la soudure pouvant alors être ménagée de manière discontinue elle aussi au niveau de tronçons de la zone d'assemblage exempts de colle.

On peut ainsi réaliser un encollage dit par dépose de tirets de colle et une soudure de manière discontinue favorisant la tenue de l'assemblage à des emplacements qui ne présentent pas de colle, ce qui, de ce fait, ne génère pas d'émanations liées à la brûlure de la colle et contribue cependant au maintien, immobiles l'un par rapport à l'autre, des deux éléments à assembler jusqu'au durcissement de la colle, par exemple dans le cas d'éléments de caisse de véhicules par passage des éléments assemblés en cataphorèse et favorise la résistance mécanique de l'assemblage. On a donc ainsi une zone d'assemblage présentant le long d'un de ces bords des tirets de colle et sur le bord opposé de la zone, des points ou cordons de soudure ménagés au niveau de tronçons sans colle.

Ainsi, la au moins une soudure réalisée peut être constituée d'un cordon de soudure continu, d'une succession de points de soudure ou d'une succession de cordons de soudure.

De manière avantageuse, on peut réaliser un point ou cordon de soudure correspondant à chaque tronçon de la ligne d'encollage exempt de colle. On peut également prévoir de réaliser un point ou cordon de soudure de manière régulière mais de fréquence différente, par exemple on peut prévoir de ne réaliser ce point de soudure que tous les deux tirets de colle à savoir un tiret de colle un espace sans colle, un tiret de colle un espace sans colle avec un point de soudure, puis un tiret de colle, un espace sans colle, un tiret de colle, puis un espace sans colle avec point de soudure.

La ligne d'encollage et la ligne de soudure sont donc parallèles, mais écartées l'une de l'autre au niveau de la zone d'assemblage, préférentiellement chacune le long d'un bord de ladite zone.

Les éléments à assembler en tôle métallique sont par exemple, deux éléments en acier, un élément en acier et le second élément en aluminium.

Selon un mode de mise en oeuvre préféré, le premier élément est assemblé sur le second élément en formant une zone d'assemblage, délimitée par l'extrémité libre du bord du premier élément, tandis que, à l'opposé de l'extrémité libre du bord du premier élément, les deux éléments s'étendent au-delà de cette zone d'assemblage en s'écartant l'un de l'autre et en formant entre eux une gorge, de préférence sensiblement en V et formant l'autre bord de la zone d'assemblage, dans laquelle peut être réalisé au moins un cordon de soudure, qui peut être continu ou discontinu, délimitant ainsi également la zone d'assemblage.

Ainsi, par exemple, le premier élément peut présenter un bord tombé destiné à venir en appui contre le second élément, la zone d'assemblage forme ainsi une bande d'assemblage délimitée par l'extrémité libre du bord tombé et la pliure formant ce bord tombé, au moins un cordon de soudure étant ménagé à la jonction entre le premier élément et le second élément au niveau de la pliure du premier élément.

Selon un autre exemple de ce mode de réalisation préféré, le premier élément présente un bord recourbé dont la partie courbe amenée en butée contre le second élément forme une jonction en forme de gorge avec ledit second élément tandis que l'extrémité libre du bord recourbé est destinée à s'étendre, sensiblement au-delà de la jonction, le long du second élément, formant la zone d'assemblage, au moins un cordon de soudure étant ménagé dans la gorge formée entre le premier élément et le second élément.

Ce mode de réalisation est particulièrement avantageux, lorsque le premier élément est un pavillon de toit dont chaque bord longitudinal présente un bord recourbé et le second élément est un côté de caisse.

Selon une forme de réalisation préférée de ce mode de réalisation, de manière à garantir l'aspect esthétique de l'assemblage ainsi réalisé, on dépose en outre dans la gorge pourvue d'au moins un cordon de soudure, tout au long de celle-ci, un cordon d'étanchéité tel qu'un joint de colle du type PVC ou mastic qui, par lissage, permet de garantir à la fois l'aspect esthétique et l'étanchéité de la zone d'assemblage, en particulier en cas de collage et/ou soudage discontinu.

De préférence, le procédé de soudage utilisé dans le procédé de l'invention est un soudage à l'arc électrique tel qu'un soudage à l'arc électrique avec une électrode non fusible du type soudage TIG (Tungsten Inert Gas), un soudage à l'arc électrique avec un fil électrode fusible sous atmosphère gazeuse du type soudage MIG-MAG (Metal Inert Gas - Metal Active Gas) tel qu'un fil base cuivre (type CuSi3%), pour un assemblage avec un pavillon aluminium, fil type AlSi3Mn1.

Un tel procédé d'assemblage est particulièrement approprié pour permettre l'assemblage d'un pavillon de toit sur une caisse de véhicule. Le premier élément métallique est donc un pavillon et le second élément métallique est un côté de caisse. De manière avantageuse, l'assemblage ainsi réalisé est particulièrement simple à mettre en oeuvre et peut donc aisément se subnstituer à un assemblage de pavillon de toit sur caisse de véhicule par soudobrasure au laser. Il peut notamment être réalisé manuellement par des techniciens sans nécessité d'un poste robotisé.

Un pavillon de toit présente donc deux bords longitudinaux recourbés dont la partie courbe vient reposer contre la partie supérieure d'un côté de caisse formant avec ledit côté de caisse une jonction en forme de gorge dont la section transversale représente sensiblement un V. L'extrémité libre du bord recourbé s'étend au-delà de cette jonction le long du côté de caisse. Ainsi, de manière avantageuse, on peut déposer de manière discontinue un cordon de colle de structure le long du côté de caisse, puis on dépose le pavillon sur le côté de caisse, l'extrémité du bord recourbé présentant une inclinaison telle que le bord recourbé du pavillon écrase le cordon de colle discontinu déposé sur le côté de caisse générant une liaison discontinue entre le pavillon et le côté de caisse par collage. Puis, on soude le pavillon au côté de caisse à l'aide, par exemple, d'un procédé de soudage à l'arc électrique, par exemple par TIG, en réalisant un cordon de soudure discontinu, chaque portion du cordon de soudure ou point de soudure, étant déposé dans la gorge de jonction, dans un tronçon de ladite jonction exempt de colle. Une fois le pavillon ainsi assemblé sur la caisse, on met en oeuvre la polymérisation de la colle, en amenant la caisse à l'étape de cataphorèse. Une fois celle-ci réalisée, un joint d'étanchéité est déposé et lissé dans la gorge entre le pavillon et le côté de caisse pour garantir à la fois l'étanchéité et l'aspect esthétique de l'assemblage.

Il est ainsi possible d'utiliser le procédé d'assemblage selon l'invention pour assembler un pavillon à une caisse de véhicule à la place d'un procédé d'assemblage par soudobrasage au laser tout en conservant les pièces à assembler identiques. On peut ainsi garantir la production de véhicules identiques sur des sites ayant des installations différentes, certains pouvant être équipés pour réaliser du soudobrasage au laser tandis que d'autres ne présentant pas d'équipements pour un tel soudobrasage au laser peuvent néanmoins fabriquer des véhicules identiques à l'aide du procédé de l'invention et avec les mêmes pièces.

L'invention a donc pour objet également un véhicule dans lequel le pavillon de toit est assemblé sur une caisse de véhicule selon le procédé de l'invention.

Selon un autre mode de mise en oeuvre du procédé de l'invention, le premier élément est assemblé sur le second élément en formant une zone d'assemblage, dont un bord est au moins l'extrémité libre du bord du premier élément et les deux éléments s'étendant au-delà de la bande d'assemblage en étant en appui l'un sur l'autre, le bord opposé de la zone d'assemblage étant délimité par des points de soudure ménagés au travers des deux éléments superposés, « par transparence », par exemple par des points de soudure par résistance électrique ou par laser.

La ligne d'encollage est de préférence discontinue et les soudures par points sont de préférence réalisées à des emplacements correspondants à des tronçons de la zone d'assemblage exempts de colle.

L'invention concerne également un assemblage entre deux éléments en tôle métallique, le bord du premier élément étant conformé pour venir en appui contre le second élément, formant une zone d'assemblage délimitée au moins par l'extrémité libre du bord du premier élément, tandis que, du côté de la zone d'assemblage opposé à l'extrémité libre du bord du premier élément, les premier et second éléments s'étendent tous deux au-delà de cette zone d'assemblage, caractérisé en ce que le bord du premier élément est assemblé sur le second élément par au moins un cordon de colle s'étendant, au niveau de la zone d'assemblage, le long de l'extrémité libre du bord du premier élément, et au moins une soudure entre les deux éléments le long du bord de la zone d'assemblage, à l'opposé du bord de la zone d'assemblage constitué par l'extrémité libre du bord du premier élément. Un tel assemblage peut avantageusement être obtenu avec le procédé de l'invention.

On décrira maintenant plus en détails un exemple de mise en oeuvre du procédé de l'invention dans lequel les éléments à assembler sont un pavillon de toit et une caisse de véhicule, à l'aide des figures en annexe dans lesquels :
la figure 1 représente une vue en coupe de la partie supérieure d'un côté de caisse sur lequel est assemblé un pavillon de toit selon un procédé d'assemblage par soudobrasage laser ;
les figures 2a, 2b, 2c et 2d représentent respectivement une caisse de véhicule sur laquelle est assemblé un pavillon selon les différentes étapes du procédé d'assemblage selon l'invention ;
les figures 3a, 3b, 3c et 3d représentent respectivement une vue en coupe de la partie supérieure de la caisse selon la ligne de coupe A-A et B-B des figures 2a, 2b, 2c, 2d.
la figure 4 représente une vue en coupe de la partie supérieure d'un côté de caisse sur laquelle est assemblé un pavillon selon le procédé d'assemblage selon l'invention.

Comme cela est visible à la figure 1, on assemble un pavillon de toit 1 sur une caisse de véhicule 2 à l'aide d'un soudo-brasage au laser. Un tel pavillon de toit 1 présente des bords longitudinaux recourbés 11 qui viennent se loger contre la partie supérieure 21 d'un côté de caisse. La partie courbe 12 du bord 11 du pavillon 1 forme contre le côté de caisse 21 une jonction en forme de gorge 3 dont le profil en section transversale est sensiblement en forme de V. L'extrémité libre 13 du bord 11 se prolonge au-delà de la jonction avec le côté de caisse 21 et s'étend sensiblement parallèlement à ce dernier, sous la gorge 3 ainsi formée dans le référentiel de la caisse 2.

L'assemblage est alors réalisé par soudo-brasage au laser en déposant un cordon de soudure 4 dans la gorge 3.

Le procédé selon l'invention permet de proposer sur un pavillon 1 et un côté de caisse 21 similaires, un procédé d'assemblage pouvant se substituer au soudo-brasage par laser sans qu'il soit nécessaire de modifier les éléments à assembler.

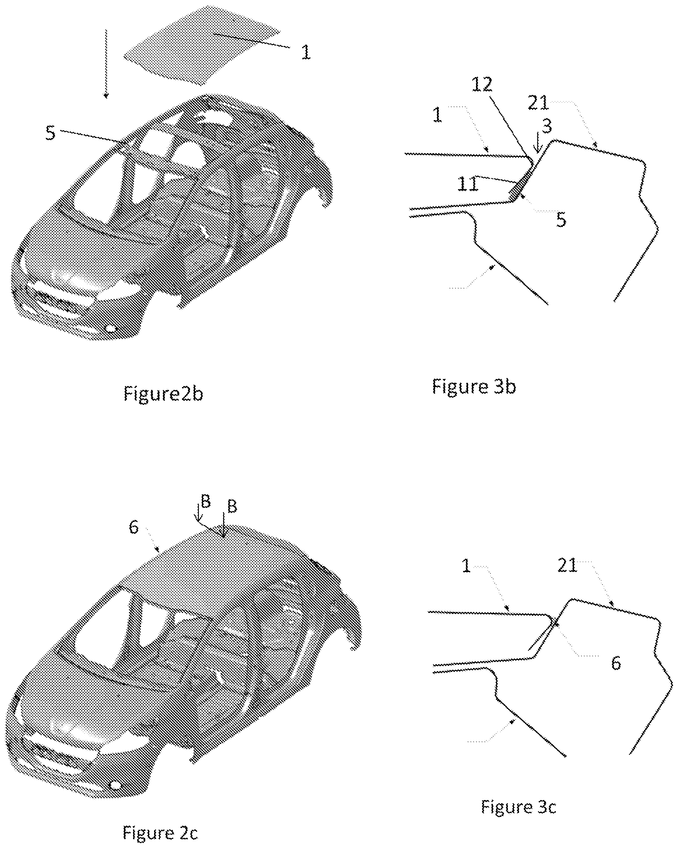

Comme cela est visible aux figures 2a et 3a, on dépose d'abord un cordon de colle 5 le long du côté de caisse 21 selon une ligne d'encollage discontinue ménageant ainsi une succession de tirets de colle le long du côté de caisse 21 et de tronçons de côté de caisse exempts de colle.

Ce cordon de colle 5 est en outre déposé le long du côté de caisse 21 de sorte que lorsque le pavillon 1 est déposé dessus (cf figure 2b), ce cordon de colle 5 se trouve écrasé entre le côté de caisse 21 et l'extrémité libre 13 du bord recourbé 11, sensiblement sous la gorge 3 ménagée à la jonction entre le pavillon 1 et le côté de caisse 21 comme cela est visible sur la figure 3b. La zone d'assemblage est ainsi définie entre l'extrémité libre 13 du bord recourbé 11 et la jonction avec le côté de caisse 21.

En variante, on pourrait également déposer le cordon de colle 5 selon une ligne d'encollage discontinue le long de l'extrémité libre 13 du bord 11 du pavillon 1.

Ainsi, le cordon de colle de structure déposé est discontinu pour laisser des zones où lors de la phase suivante la colle ne sera pas présente sous le cordon de soudage TIG afin d'éviter sa destruction
La colle structurelle n'est fonctionnelle qu'après sa polymérisation, celle-ci n'intervenant qu'après le traitement thermique constitué par le passage de la caisse en cataphorèse, par exemple.

Des points de soudage électrique maintiennent le pavillon à l'avant et l'arrière du pavillon.

De manière à maintenir immobiles le pavillon 1 et la caisse de véhicule 2 jusqu'au passage en cataphorèse, on réalise des points de soudure à la jonction entre eux. Ces points de soudure participent également à la prestation mécanique de l'assemblage mais ils permettent surtout d'éviter tous les mouvements potentiels entre le pavillon 1 et la caisse 2 jusqu'au passage en cataphorèse
Ces points de soudure 6 sont constitués de cordons de soudure obtenus à l'aide d'un soudage à l'arc électrique tel qu'avec une électrode non fusible du type soudage TIG (Tungsten Inert Gas).

Les cordons de soudure TIG 6 par exemple sont déposés dans le fond de la gorge 3 à la jonction du pavillon 1 et du côté de caisse 21 sur les tronçons de cette jonction correspondant aux zones exemptes de colle de la ligne d'encollage discontinue. De cette manière, on évite tous risques d'émanations liées à la brûlure de la colle et on évite également la détérioration du collage. On réalise de préférence des cordons TIG de 10 à 15mm le long du pavillon afin d'assurer le maintien de celui-ci. Ainsi la géométrie du pavillon est figée.

Une fois, les points de soudure 6 réalisés, on passe la caisse en cataphorèse. La colle sous l'effet de la température en cataphorèse polymérise.

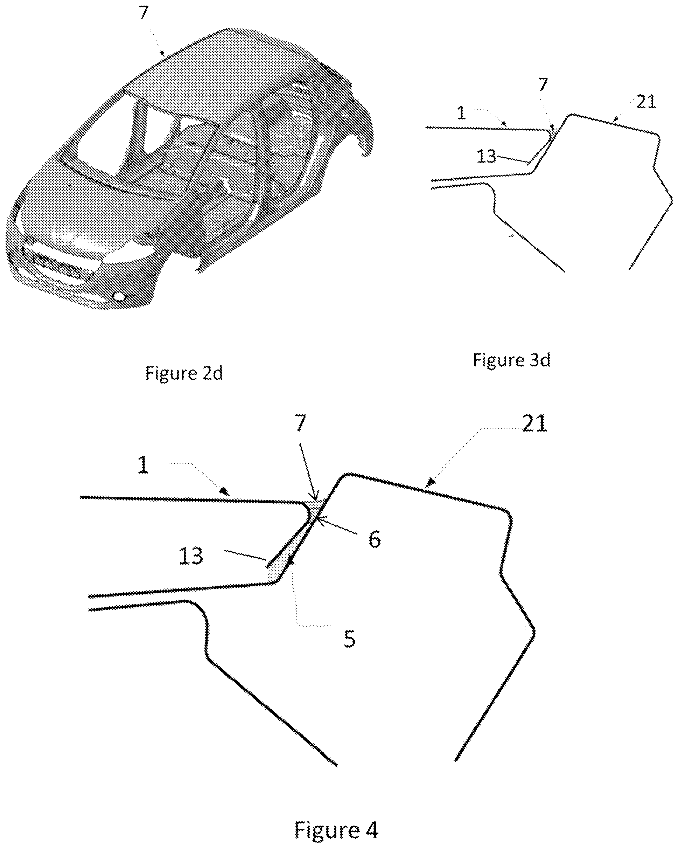

Après passage en cataphorèse (ou durcissement à l'air dans le cas d'une colle bi-composant), on dépose dans la gorge 3 tout du long de celle-ci un joint d'étanchéité 7 tel qu'une colle type en PVC ou du mastic qui permet de garantir à la fois l'étanchéité de l'assemblage et l'aspect du joint par lissage, voir les figures 2d et 3d. Ainsi, la colle 7 est lissée pour obtenir un congé de raccordement entre le pavillon et le côté de caisse.

Sur la figure 4 apparaît l'assemblage réalisé, on peut y voir la colle 5 et le cordon de soudure 6 ainsi que le joint d'étanchéité 7, le cordon de soudure 6 n'étant pas au-dessus de la colle 5 directement.

Un procédé selon l'invention permet une solution très économique d'assemblage de ces éléments. Cette solution est manuelle et simple à mettre en oeuvre et permet d'éviter l'utilisation d'autres procédés d'assemblage plus coûteux comme le soudobrasage laser, dont certains sites ne sont pas équipés.

## Revendications

1. Procédé d'assemblage entre deux éléments en tôle métallique (1, 2), le bord (11) du premier élément (1) étant conformé pour venir en appui contre le second élément (2), formant une zone d'assemblage délimitée au moins par l'extrémité libre (13) du bord (11) du premier élément (1), tandis que, du côté de la zone d'assemblage opposé à ladite extrémité libre (13) du bord (11) du premier élément (1), les premier et second éléments s'étendent tous deux au-delà de cette zone d'assemblage, **caractérisé en ce que** ledit procédé comprend :
la dépose d'un cordon de colle (5) sur l'un des éléments (1, 2), de sorte que, lors de l'assemblage des deux éléments (1, 2), la ligne d'encollage se positionne entre les deux éléments (1, 2), au niveau de la zone d'assemblage, de préférence le long de l'extrémité libre (13) du bord (11) du premier élément (1), puis
la réalisation d'au moins une soudure entre les deux éléments (1, 2) le long du bord de la zone d'assemblage, opposé au bord de la zone d'assemblage constitué par l'extrémité libre (13) du bord (11) du premier élément (1), cette fixation par soudure permettant de maintenir les deux éléments immobiles l'un par rapport à l'autre jusqu'à une étape de durcissement de la colle finalisant l'assemblage.

2. Procédé d'assemblage selon la revendication 1, **caractérisé en ce qu'**on dépose la colle selon une ligne discontinue, la ligne d'encollage présentant des tronçons exempts de colle.

3. Procédé d'assemblage selon la revendication 1, **caractérisé en ce que** la soudure est ménagée, de manière discontinue, au niveau de tronçons de la zone d'assemblage exempts de colle.

4. Procédé d'assemblage selon l'une des revendications 1 à 3, **caractérisé en ce que**, le premier élément (1) est assemblé sur le second élément (2) en formant une zone, délimitée par l'extrémité libre (13) du bord (11) du premier élément (1), tandis que, à l'opposé de l'extrémité libre du bord du premier élément (1), les deux éléments (1, 2) s'étendent au-delà de cette zone en s'écartant l'un de l'autre et en formant entre eux une gorge (3) dans laquelle est réalisé au moins un cordon de soudure.

5. Procédé selon l'une des revendications 1 à 3, **caractérisé en ce que** le premier élément présente un bord tombé destiné à venir en appui contre le second élément, la zone d'assemblage étant délimitée par l'extrémité libre du bord tombé et la pliure formant ce bord tombé, au moins un cordon de soudure étant ménagé à la jonction entre le premier élément et le second élément au niveau de la pliure du premier élément.

6. Procédé selon l'une des revendications 1 à 4, **caractérisé en ce que** le premier élément présente un bord (11) recourbé dont la partie courbe (12) amenée en butée contre le second élément (2) forme une jonction en forme de gorge (3) avec ledit second élément (2) tandis que l'extrémité libre (13) du bord recourbé (11) est destinée à s'étendre, sensiblement au-delà de la jonction, le long du second élément (21), formant la zone d'assemblage, au moins un cordon de soudure (6) étant ménagé dans la gorge (3) formée entre le premier élément (1) et le second élément (2).

7. Procédé selon l'une des revendications 1 à 6, **caractérisé en ce que** le soudage est un soudage à l'arc électrique tel qu'un soudage à l'arc électrique avec une électrode non fusible du type soudage TIG (Tungsten Inert Gas).

8. Procédé selon l'une des revendications 1 à 7, **caractérisé en ce qu'**on dépose en outre le long du bord de la zone d'assemblage pourvu d'au moins un cordon de soudure, un cordon d'étanchéité (7) continu tel qu'un joint de colle du type PVC, mastic.

9. Assemblage entre deux éléments en tôle métallique (1, 2), le bord (11) du premier élément (1) étant conformé pour venir en appui contre le second élément (2), formant une zone d'assemblage délimitée au moins par l'extrémité libre (13) du bord (11) du premier élément (1), tandis que, du côté de la zone d'assemblage opposé à l'extrémité libre (13) du bord (11) du premier élément (1), les premier et second éléments (1, 2) s'étendent tous deux au-delà de cette zone d'assemblage, **caractérisé en ce que** le bord (11) du premier élément (1) est assemblé sur le second élément (2) par au moins un cordon de colle (5) s'étendant, au niveau de la zone d'assemblage, le long de l'extrémité libre (13) du bord (11) du premier élément (1), et par au moins une soudure (6) entre les deux éléments (1, 2) le long du bord de la zone d'assemblage, opposé au bord de la zone d'assemblage constitué par l'extrémité libre (13) du bord (11) du premier élément (1).

10. Véhicule automobile comportant un pavillon de toit assemblé sur les côtés d'une caisse selon un procédé d'assemblage selon l'une des revendications 1 à 3 et 6 à 8.

## Patentansprüche

1. Verfahren zum Verbinden zweier Elemente aus Metallblech (1, 2), wobei der Rand (11) des ersten Elements (1) ausgestaltet ist, um gegen das zweite Element (2) zur Auflage zu kommen, indem ein Verbindungsbereich gebildet wird, der mindestens durch das freie Ende (13) des Rands (11) des ersten Elements (1) abgegrenzt ist, während auf der Seite des Verbindungsbereichs, der dem freien Ende (13) des Rands (11) des ersten Elements (1) entgegengesetzt ist, das erste und das zweite Element sich beide über diesen Verbindungsbereich hinaus erstrecken, **dadurch gekennzeichnet, dass** das Verfahren Folgendes umfasst:
das Aufbringen einer Klebstoffsnaht (5) auf einem der Elemente (1, 2) derart, dass sich bei dem Verbinden der beiden Elemente (1, 2) die Beleimungslinie zwischen den zwei Elementen (1, 2) an der Stelle des Verbindungsbereichs, bevorzugt entlang des freien Endes (13) des Rands (11) des ersten Elements (1), positioniert, dann
das Ausführen mindestens einer Schweißung zwischen den zwei Elementen (1, 2) entlang des Rands des Verbindungsbereichs, dem Rand des Verbindungsbereichs entgegengesetzt, der von dem freien Ende (13) des Rands (11) des ersten Elements (1) gebildet wird, wobei diese Befestigung durch Schweißen es erlaubt, die zwei Elemente zueinander bis zu einem Aushärtungsschritt des Klebstoffs, der das Verbinden abschließt, bewegungslos zu halten.

2. Verfahren zum Verbinden nach Anspruch 1, **dadurch gekennzeichnet, dass** der Klebstoff entlang einer diskontinuierlichen Linie aufgebracht wird, wobei die Beleimungslinie Abschnitte, die frei von Klebstoff sind, aufweist.

3. Verfahren zum Verbinden nach Anspruch 1, **dadurch gekennzeichnet, dass** die Schweißung diskontinuierlich an der Stelle von Abschnitten des Verbindungsbereichs, der von Klebstoff frei sind, eingerichtet wird.

4. Verfahren zum Verbinden nach einem der Ansprüche 1 bis 3, **dadurch gekennzeichnet, dass** das erste Element (1) auf dem zweiten Element (2) unter Bilden eines Bereichs verbunden wird, der durch das freie Ende (13) des Rands (11) des ersten Elements (1) abgegrenzt ist, während sich entgegengesetzt zu dem freien Ende des Rands des ersten Elements (1) die zwei Elemente (1, 2) über diesen Bereich hinaus erstrecken, indem sie sich voneinander abspreizen, und indem sie zwischeneinander eine Nut (3) bilden, in der mindestens eine Schweißnaht hergestellt wird.

5. Verfahren nach einem der Ansprüche 1 bis 3, **dadurch gekennzeichnet, dass** das erste Element eine Bördelung aufweist, die dazu bestimmt ist, gegen das zweite Element zum Aufliegen zu kommen, wobei die Verbindungsbereiche von dem freien Ende der Bördelung und dem Falz, der diese Bördelung bildet, abgegrenzt wird, wobei mindestens eine Schweißnaht an dem Stoß zwischen dem ersten Element und dem zweiten Element an der Stelle des Falzes des ersten Elements eingerichtet wird.

6. Verfahren nach einem der Ansprüche 1 bis 4, **dadurch gekennzeichnet, dass** das erste Element einen gekrümmten Rand (11) aufweist, dessen gekrümmter Teil (12) zum Anschlag gegen das zweite Element (2) gebracht einen Stoß in Form einer Nut (3) mit dem zweiten Element (2) bildet, während das freie Ende (13) des gekrümmten Rands (11) dazu bestimmt ist, sich im Wesentlichen über den Stoß hinaus entlang des zweiten Elements (21), das die Verbindungsbereiche bildet, zu erstrecken, wobei mindestens eine Schweißnaht (6) in der Nut (3), die zwischen dem ersten Element (1) und dem zweiten Element (2) gebildet ist, eingerichtet ist.

7. Verfahren nach einem der Ansprüche 1 bis 6, **dadurch gekennzeichnet, dass** das Schweißen ein Elektroschweißen wie ein Elektroschweißen mit einer nicht schmelzbaren Elektrode vom Typ TIG-(Tungsten Inert Gas)-Schweißen ist.

8. Verfahren nach einem der Ansprüche 1 bis 7, **dadurch gekennzeichnet, dass** weiter entlang des Rands des Verbindungsbereichs, der mit mindestens einer Schweißnaht versehen ist, eine durchgehende Abdichtungsnaht (7), wie eine Dichtung mit Klebstoff vom Typ PVC, Kitt, aufgebracht wird.

9. Verbinden zwischen zwei Elementen aus Metallblech (1, 2), wobei der Rand (11) des ersten Elements (1) ausgestaltet ist, um zum Aufliegen gegen das zweite Element (2) zu kommen, indem ein Verbindungsbereich gebildet wird, der mindestens durch das freie Ende (13) des Rands (11) des ersten Elements (1) abgegrenzt ist, während auf der Seite des Verbindungsbereichs, der dem freien Ende (13) des Rands (11) des ersten Elements (1) entgegengesetzt ist, das erste und das zweite Element (1, 2) sich beide über diesen Verbindungsbereich hinaus erstrecken, **dadurch gekennzeichnet, dass** der Rand (11) des ersten Elements (1) auf dem zweiten Element (2) durch mindestens eine Klebstoffsnaht (5) verbunden ist, die sich an der Stelle des Verbindungsbereichs entlang des freien Endes (13) des Rands (11) des ersten Elements (1) erstreckt, und durch mindestens eine Schweißung (6) zwischen den zwei Elementen (1, 2) entlang des Rands des Verbindungsbereichs, der dem Rand des Verbindungsbereichs, der von dem freien Ende (13) des Rands (11) des ersten Elements (1) gebildet wird, entgegengesetzt ist.

10. Kraftfahrzeug, das einen Dachhimmel beinhaltet, der auf den Seiten einer Karosserie gemäß einem Verbindungsverfahren nach einem der Ansprüche 1 bis 3 und 6 bis 8 verbunden ist.

## Claims

1. Assembly method for assembling together two sheet metal elements (1, 2), the edge (11) of the first element (1) being shaped to come to bear against the second element (2), forming an assembly region defined at least by the free end (13) of the edge (11) of the first element (1), while, on the opposite side of the assembly region from said free end (13) of the edge (11) of the first element (1), both the first and the second elements extend beyond said assembly region, said assembly method being **characterized in that** it comprises:
depositing a bead of adhesive (5) on one of the elements (1, 2), so that, while the two elements (1, 2) are being assembled together, the adhesive application line along which the adhesive is applied is positioned between the two elements (1, 2), at the assembly region, preferably along the free end (13) of the edge (11) of the first element (1); and then
performing welding to form at least one weld between the two elements (1, 2) along the edge of the assembly region that is opposite from the edge of the assembly region that is constituted by the free end (13) of the edge (11) of the first element (1), this fastening by welding making it possible to hold the two elements stationary relative to each other until a step of hardening the adhesive takes place that finalizes the assembly.

2. Assembly method according to claim 1, **characterized in that** the adhesive is deposited in a discontinuous line, the adhesive application line having segments devoid of adhesive.

3. Assembly method according to claim 1, **characterized in that** the welding is performed, discontinuously, at segments of the assembly region that are devoid of adhesive.

4. Assembly method according to any one of claims 1 to 3, **characterized in that** the first element (1) is assembled to the second element (2) by forming a region, defined by the free end (13) of the edge (11) of the first element (1), while, opposite from the free end of the edge of the first element (1), the two elements (1, 2) extend beyond said region while diverging from each other and while forming a groove (3) between them in which at least one bead of welding is formed.

5. Method according to any one of claims 1 to 3, **characterized in that** the first element has a dropped edge designed to come to bear against the second element, the assembly region being defined by the free end of the dropped edge and by the fold forming said dropped edge, at least one bead of welding being provided at the junction between the first element and the second element at the fold of the first element.

6. Method according to any one of claims 1 to 4, **characterized in that** the first element has a curved-back edge (11), of which the curved portion (12) as brought into abutment against the second element (2) forms a junction in the shape of a groove (3) with said second element (2), while the free end (13) of the curved-back edge (11) is designed to extend, substantially beyond the junction, along the second element (21), forming the assembly region, at least one bead of welding (6) being provided in the groove (3) formed between the first element (1) and the second element (2).

7. Method according to any one of claims 1 to 6, **characterized in that** the welding is electric arc welding such as electric arc welding with a non-consumable electrode of the Tungsten Inert Gas (TIG) welding type.

8. Method according to any one of claims 1 to 7, **characterized in that** a continuous bead of sealant (7) such as a seal of adhesive of the polyvinyl chloride (PVC) adhesive sealant type is also deposited along the edge of the assembly region as provided with at least one bead of welding.

9. Assembly of two sheet metal elements (1, 2), the edge (11) of the first element (1) being shaped to come to bear against the second element (2), forming an assembly region defined at least by the free end (13) of the edge (11) of the first element (1), while, on the opposite side of the assembly region from the free end (13) of the edge (11) of the first element (1), both the first and the second elements (1, 2) extend beyond said assembly region, said assembly being **characterized in that** the edge (11) of the first element (1) is assembled to the second element (2) by at least one bead of adhesive (5) extending, at the assembly region, along the free end (13) of the edge (11) of the first element (1), and by at least one weld (6) between the two elements (1, 2) along the edge of the assembly region that is opposite from the edge of the assembly region that is constituted by the free end (13) of the edge (11) of the first element (1).

10. Automotive vehicle having a roof that is assembled to the sides of a body using an assembly method according to any one of claims 1 to 3 and 6 to 8.
